# EUROPÄISCHE PATENTSCHRIFT

(11) **EP 1 120 444 B1**
(45) Veröffentlichungstag und Bekanntmachung des Hinweises auf die Patenterteilung: **29.12.2004**
(21) Anmeldenummer: 01810049.5
(22) Anmeldetag: 18.01.2001
(51) Int. Cl.: C09B 67/22, C09B 67/48

(54) **Ternäre Pigment-Zusammensetzungen**
Ternary pigment compositions
Compositions ternaires de pigments

(30) Priorität: 27.01.2000 CH 2000155
(43) Veröffentlichungstag der Anmeldung: 01.08.2001
(73) Patentinhaber: Ciba Specialty Chemicals Holding Inc., 4057 Basel (CH)
(72) Erfinder: Lenz, Roman, 4410 Liestal (CH); Wallquist, Olof, 4106 Therwil (CH); Schlöder, Ingo, 1753 Matran (CH)

(56) Entgegenhaltungen:
- EP-A- 0 794 235
- US-A- 4 579 949
- US-A- 4 783 540

## Beschreibung

Die vorliegende Erfindung betrifft temäre Pigment-Zusammensetzungen aus Verbindungen der Formeln (I), (II) und (III), 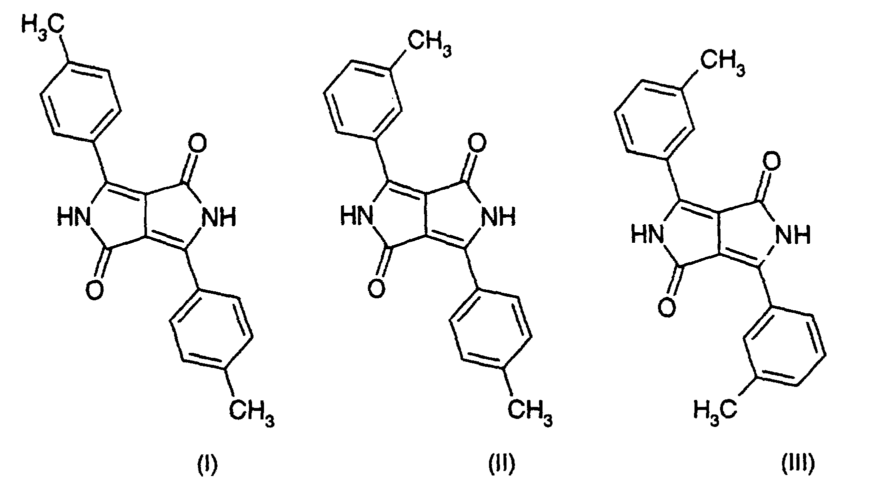 erhältlich durch Umsetzung von Bernsteinsäurediestem mit einer Mischung aus 90 bis 15 Mol-%, bevorzugt 80 bis 25 Mol-%, besonders bevorzugt 75 bis 25 Mol-% 4-Methylbenzonitril und 10 bis 85 Mol-%, bevorzugt 20 bis 75 Mol-%, besonders bevorzugt 25 bis 75 Mol-% 3-Methylbenzonitril, wobei die Molanteile der 4-Methyl- und 3-Methylbenzonitrile in der Summe 100 Mol-% ergeben, sowie ein Verfahren zu deren Herstellung und deren Verwendung zum Pigmentieren von organischem Material.

Aus US 4,720,305 sind Pigment-Zusammensetzungen aus Diketopyrrolopyrrolen (DPPs) bekannt, die durch Mischsynthese aus zwei unterschiedlichen Nitrilen A und B mit Bemsteinsäurediester hergestellt werden können, wobei die Molanteile der in den Beispielen offenbarten Nitrile im Bereich von 90 bis 99,9 Mol-% A zu 10 bis 0,1 Mol-% B liegt. 3- und 4-Methylbenzonitrile sind nicht spezifisch beschrieben.

Aus US 4,579,949 (Beispiele 30, 36 und 37) sind Verfahren zur Herstellung von Pigment-Zusammensetzungen aus Diketopyrrolopyrrolen durch Umsetzung eines Bernsteinsäurediesters mit einem Gemisch von 4-Methylbenzonitril mit Benzonitril, 4-Methoxybenzonitril oder 4-Chlorbenzonitril im Molverhältnis 1:1 bekannt. In Beispiel 4 dieses Patents ist die Herstellung von DPP (1), einem roten Pigment, beschrieben.

Aus US 4,783,540 (Beispiel 2) ist eine rote Pigment-Zusammensetzung aus DPP (I) und DPP (III) im Molverhältnis von 83:17 bekannt, die in einem zweistufigen Verfahren durch Herstellung der Einzelpigmente (I) und (III) und anschliessender Kofällung hergestellt wird.

Aus EP-A-704,497, Beispiel 2, ist eine rote Pigment-Zusammensetzung aus DPP (III) und 1,4-Diketo-3,6-di-(4-chlorphenyl)-pyrrolo[3,4-c]pyrrol im Molverhältnis von 1:1 bekannt.

In US 4,415,685 sind die DPPs der Formeln (1) und (III) (Beispiele 28 und 31) als Einzelpigmente mit roter Nuance beschrieben.

Aus EP-A-794235 (Beispiel 6) ist eine orange Pigment-Zusammensetzung aus DPP(I) and DPP(III) beschrieben.

Die Aufgabe der vorliegenden Erfindung war es, Pigment-Zusammensetzungen, bevorzugt mit hoher Sättigung und hohem Deckvermögen, insbesondere Farbmittel für den Industrieanstrich, bereitzustellen, die sich durch ihre gelbstichig rote bis orange Nuance auszeichnen, und die durch ein einfaches und wirtschaftlich interessantes Herstellungsverfahren zugänglich sind. Insbesondere sollten die Ausfärbungen (in PVC Pressfolien enthaltend 0,5 Gew.-% Pigment, siehe Definition weiter unten) dieser Pigment-Zusammensetzungen einen Farbtonwinkel h im Bereich von 35 bis 45 besitzen, wobei die weiteren gewünschten Pigmenteigenschaften nicht negativ beeinflusst werden sollten.

Demgemäss wurden die eingangs definierten Pigment-Zusammensetzungen gefunden.

Ferner wurden deren Verwendung zum Pigmentieren von hochmolekularem Material, insbesondere für Industrieanstriche, sowie ein Verfahren zu ihrer Herstellung gefunden.

Eine bevorzugte Ausführungsform der vorliegenden Erfindung betrifft die erfindungsgemässen Pigment-Zusammensetzungen mit einem Deckvermögen, ΔE^{*}-S/W von < 8, besonders bevorzugt von <7 und ganz besonders bevorzugt von <5, sowie insbesondere ganz besonders bevorzugt von <3. Die Analysenproben (PVC-Pressplatten (1 mm Dicke), enthaltend 0,5 Gew.-% einer erfindungsgemässen Pigment-Zusammensetzung) zur Messung der ΔE^{*}-S/W-Werte werden nach DIN 53 775 Teil 7 hergestellt. Der ΔE^{*}-S/W-Wert gibt den Betrag der Farbdifferenz der Analysenproben im L^{·}C^{·}*h*-System der Commission Internationale de I'Eclairage, über schwarzem ("S") und weissem Untergrund an; je kleiner der Wert, desto opaker/deckender ist die Analysenprobe.

In einer bevorzugten Ausführungsform der vorliegenden Erfindung sind die erfindungsgemässen Pigment-Zusammensetzungen dadurch erhältlich, dass man die Molanteile der 4-Methyl- und 3-Methylbenzonitrile im Bereich von 80 bis 55 Mol-% 4-Methylbenzonitril zu 20 bis 45 Mol-% 3-Methylbenzonitril wählt, wobei die so erhältlichen Pigment-Zusammensetzungen einen Farbtonwinkel h im Bereich von 35 bis 42, besonders bevorzugt im Bereich von 36 bis 39 und ganz besonders bevorzugt im Bereich von 37 bis 38,5 besitzen.

Der Farbtonwinkel *h* ist definiert im L^{·}C^{·}*h*-System der Commission Internationale de I'Eclairage, wobei L* ein Mass der Helligkeit und C* ein Mass der Sättigung ist. Die in der vorliegenden Erfindung verwendeten *h* und C* Werte sind unter Verwendung von 0,5 Gew.-% Pigment in PVC Pressfolien nach der Messmethode DIN 53 775 Teil 7 bestimmt.

Eine weitere besonders bevorzugte Ausführungsform der erfindungsgemässen Pigment-Zusammensetzungen ist dadurch erhältlich, dass man die Molanteile der 4-Methyl- und 3-Methylbenzonitrile im Bereich von 80 bis 55 Mol-% 4-Methylbenzonitril zu 20 bis 45 Mol-% 3-Methylbenzonitril wählt, wobei die Pigment-Zusammensetzungen einen Farbtonwinkel *h* im Bereich von 35 bis 42, und einen Sättigungswert C* im Bereich von 65 bis 80 besitzen.

Ferner sind in einer weiteren bevorzugten Ausführungsform erfindungsgemässe Pigment-Zusammensetzungen erhältlich, indem man die Molanteile der 4-Methyl- und 3-Methylbenzonitrile im Bereich von 45 bis 25 Mol-% 4-Methylbenzonitril zu 55 bis 75 Mol-% 3-Methylbenzonitril wählt, wobei die Pigment-Zusammensetzungen einen Farbtonwinkel *h* im Bereich von 35 bis 45, besonders bevorzugt im Bereich von 36 bis 43 und ganz besonders bevorzugt im Bereich von 38 bis 43 besitzen.

Eine weitere bevorzugte Ausführungsform der vorliegenden Erfindung betrifft erfindungsgemässe Pigment-Zusammensetzungen, die dadurch erhältlich sind, dass die Molanteile von 4-Methyl- und 3-Methylbenzonitril im Bereich von 80 bis 55 Mol-% 4-Methylbenzonitril zu 20 bis 45 Mol-% 3-Methylbenzonitril wählt, deren Kristallgitter im wesentlichen dem der Verbindung (I) entspricht, das bevorzugt im Röntgenspektrum Doppelglanzwinkel (2 Theta) bei 7,4; 15,5; 20,1; 22,2; 22,9; 24,3; 26; 7; 31,2; und 32,6 (+/-0,5 Theta) enthält.

Ferner betrifft eine weitere bevorzugte Ausführungsform der vorliegenden Erfindung erfindungsgemässe Pigment-Zusammensetzungen, die dadurch erhältlich sind, dass man die Molanteile von 4-Methyl- und 3-Methylbenzonitril im Bereich von 45 bis 25 Mol-%, bevorzugt im Bereich von 40 bis 25 Mol-%, 4-Methylbenzonitril zu 55 bis 75 Mol-%, bevorzugt im Bereich von 60 bis 75 Mol-%, 3-Methylbenzonitril wählt, deren Kristallgitter im wesentlichen dem der Verbindung (II) entspricht, das bevorzugt im Röntgenspektrum Doppelglanzwinkel (2 Theta) bei 7,8; 12,5; 14,0; 15,5; 19,1; 21,1; 23,7; 26,1 und 32,3 (+/- 0,5 2 Theta) enthält.

Eine besonders bevorzugte Ausführungsform der vorliegenden Erfindung betrifft die erfindungsgemässen Pigment-Zusammensetzungen, deren Farbtonwinkel h im Bereich von 35 bis 45 liegt, besonders bevorzugt im Bereich von 36 bis 43, und deren Kristallgitter im wesentlichen dem der Verbindung (II) entspricht, wobei das Röntgenspektrum bevorzugt Doppelglanzwinkel (2Theta) bei 7,8; 12,5; 14,0; 15,5; 19,1; 21,1; 23,7; 26,1 und 32,3 (+/- 0,5 2 Theta) enthält, die dadurch erhältlich sind, dass man die Molanteile von 4-Methylund 3-Methylbenzonitril im Bereich von 40 bis 25 Mol-% 4-Methylbenzonitril zu 60 bis 75 Mol-% 3-Methylbenzonitril wählt.
Ganz besonders bevorzugt sind Pigment-Zusammensetzungen, deren Farbtonwinkel h im Bereich von 38 bis 43 liegt, und deren Kristallgitter im wesentlichen dem der Verbindung (II) entspricht, wobei das Röntgenspektrum bevorzugt Doppelglanzwinkel (2 Theta) bei 7,8; 12,5; 14,0; 15,5; 19,1; 21,1; 23,7; 26,1 und 32,3 (+/- 0,5 2 Theta) enthält, die dadurch erhältlich sind, dass man 70 Mol-% 4-Methylbenzonitril zu 30 Mol-% 3-Methylbenzonitril einsetzt. Der Ausdruck im wesentlichen bedeutet, dass das Röntgenspektrum der erfindungsgemässen Pigment-Zusammensetzungen dem Röntgenspektrum der einzelnen Verbindungen (I), (II) bzw. (III) (je nach Zusammensetzung) entspricht, mit dem Unterschied, dass charakteristische Glanzwinkelverschiebungen der einzelnen Reflexe durch Gitteraufweitung (Verschiebung zu kleineren Glanzwinkeln) oder Gittereinengung (Verschiebung zu grösseren Glanzwinkeln) im Bereich von +/- 0,5 Theta als auch Intensitätsänderungen möglich sein können.

Nach bisherigen Beobachtungen bilden, je nach Zusammensetzung, die Verbindungen (I) oder (II) ein Wirtsgitter, in dem jeweils die beiden anderen Komponenten eingebaut sind.

Das Röntgenspektrum einer festen Lösung ist grundlegend verschieden von dem einer reinen physikalischen Mischung derselben Stoffe. Bei letzterem ist das Röntgenspektrum im wesentlichen deckungsgleich mit den überlagerten Röntgenspektren der reinen Stoffe, während bei der festen Lösung ein anderes Spektrum erhalten wird. Im speziellen Fall einer festen Lösung vom "Wirt-Gast"-Typ entspricht das Spektrum im wesentlichen dem des Wirtsgitters.

Das Röntgenspektrum der Verbindung (I) ist durch Doppelglanzwinkel (2 Theta) bei 7,4; 12,6; 15,5; 20,1; 22,2; 22,9; 24,3; 26,7; 31,2; 32,6 und 41,4 charakterisiert.

Das Röntgenspektrum der Verbindung (II) ist durch Doppelglanzwinkel (2 Theta) bei 7,8; 12,5; 14,0; 15,5; 19,1; 21,1; 23,7; 26,1; 28,3; 32,3 und 41,9 charakterisiert.

Die Herstellung der erfindungsgemässen Pigment-Zusammensetzungen erfolgt in der Regel analog zum in US 4,720,305 beschriebenen Verfahren, indem man eine Mischung bestehend aus 3-Methyl- und 4-Methylbenzonitril mit einem Bernsteinsäurediester umsetzt.

Demgemäss betrifft die vorliegende Erfindung ein Verfahren zur Herstellung der erfindungsgemässen Pigment-Zusammensetzungen durch Umsetzung von Bernsteinsäurediestern mit einer Mischung aus Benzonitrilen in einem organischen Lösungsmittel in Gegenwart einer Base bei erhöhter Temperatur, indem man als Nitrile eine Mischung aus 4-Methyl- und 3-Methylbenzonitril einsetzt, wobei man die Molanteile der 4-Methyl- und 3-Methylbenzonitrile in einem Bereich von 90 bis 15 Mol-% 4-Methylbenzonitril zu 10 bis 85 Mol-% 3-Methylbenzonitril wählt.

Die Gesamtkonzentration der Nitrile im organischen Lösungsmittel wählt man in der Regel im Bereich von 5 mol/l bis 0,5 mol/l.

Das Molverhältnis von Base zu Bernsteinsäurediester liegt im allgemeinen im Bereich von 0,1 bis 10 mol Base zu 1 mol Bernsteinsäurediester.

Als Druck wählt man bevorzugt Atmosphärendruck.

Die Reaktionstemperatur liegt üblicherweise im Bereich von 60 bis 140 °C, vorzugsweise im Bereich von 80 bis 120 °C.

Die Reaktionsdauer wählt man üblicherweise in Abhängigkeit der gewählten Temperatur. Sie liegt im allgemeinen im Bereich von 30 Minuten bis 20 Stunden.

Das Reaktionsprodukt kann man nach üblichen Methoden (wie beispielsweise in US 4,783,540 und US 4,579,949 beschrieben) durch Hydrolyse und/oder Protolyse aufarbeiten und anschliessend isolieren.

Gewünschtenfalls empfiehlt es sich, das erfindungsgemässe Verfahren in Gegenwart von Wachstuminhibitoren durchzuführen.

Des weiteren betrifft die vorliegende Erfindung Zusammensetzungen enthaltend die erfindungsgemässen Pigment-Zusammensetzungen.

Eine bevorzugte Ausgestaltung der vorliegenden Erfindung betrifft Zusammensetzungen enthaltend die erfindungsgemässen Pigment-Zusammensetzungen und Wachstumsinhibitoren.

Eine bevorzugte des erfindungsgemässen Verfahrens betrifft ein Verfahren zur Herstellung der erfindungsgemässen Pigment-Zusammensetzungen enthaltend Wachstumsinhibitoren durch Umsetzung von Bemsteinsäurediestern mit einer Mischung aus Benzonitrilen in einem organischen Lösungsmittel in Gegenwart einer Base bei erhöhter Temperatur, indem man die Molanteile der Benzonitrile in einem Bereich von 90 bis 15 Mol-% 4-Methylbenzonitril zu 10 bis 85 Mol-% 3-Methylbenzonitril wählt und in Gegenwart eines Wachstumsinhibitors umsetzt.

Des weiteren betrifft die eine bevorzugt Ausführungsform der vorliegenden Erfindung Zusammensetzungen enthaltend die Pigment-Zusammensetzungen und Wachstumsinhibitoren, die erhältlich sind nach dem erfindungsgemässen Verfahren.

Geeignete Wachtumsinhibitoren sind substituierte Benzonitrile beispielsweise Isophthalodinitril und Terephthalodinitril, oder substituierte DPPs, beispielsweise 1,4-Diketo-3,6-di-(3-cyanophenyl)-pyrrolo[3,4-c]pyrrol, besonders bevorzugt ist lsophthalodinitril.

Das Molverhältnis der Wachstumsinhibitoren zur Mischung der Methylenzonitrile liegt im allgemeinen im Bereich von 0,0001 bis 1 Mol, bevorzugt von 0,001 bis 0,1 Mol Wachtumsinhibitor zu 1 Mol der Mischung der Methylbenzonitrile.

Organische Lösungsmittel können beispielsweise für polare, apolare, protische oder aprotische organische Lösungsmittel stehen. Im einzelnen können als Lösungsmittel beispielsweise Ether wie Tetrahydrofuran, Dioxan oder Glykolether wie Ethylenglykolmethylether, Ethylenglykol-ethylether, Diethylenglykol-monomethylether oder Diethylenglykol-monoethylether, oder aromatische Kohlenwasserstoffe, wie Benzol oder durch Alkyl, Alkoxy oder Halogen substituiertes Benzol, wie Toluol, Xylol, Anisol oder Chlorbenzol, Dichlor- oder Trichlorbenzol, N,N'-Dimethylacetamid, N-Methylpyrrolidon, oder aromatische N-Heterocyclen, wie Pyridin, Picolin oder Chinolin, oder Alkohole wie sekundäre und tertiäre Alkohole wie tert.-Butanol, sek.- Amylalkohol oder tert.-Amylalkohol, ferner Ethylenglykol oder Propylenglykol stehen. Die genannten Lösungsmittel können auch als Mischungen eingesetzt werden.

Als Base kann man beispielsweise Alkalimetalle wie Lithium, Natrium oder Kalium sowie deren Hydroxide wie Lithium-, Natrium- oder Kaliumhydroxid oder deren Alkalimetallamide wie Lithium-, Natrium- oder Kaliumamid, oder deren Alkalimetallhydride, wie Lithium-, Natrium- oder Kaliumhydrid oder deren Alkalimetallalkoholate, insbesondere Alkohole von C₄-C₁₀-Alkanen wie z.B. Calcium-, Magnesium-, Lithium-, Natrium- oder Kalium-tert.-butylat, Kalium-tert.-amylat, Kalium-2-methyl-2-pentylat, Kalium -3-methyl-3-pentylat, Kalium-3-ethyl-3-pentylat einsetzen.

Bemsteinsäurediester stehen für symmetrische oder asymmetrische Diester, bevorzugt für symmetrische Diester. Vorzugsweise verwendet man Bernsteinsäuredialkylester wie Bernsteinsäure-di(C₁-C₁₂Alkyl)ester, bevorzugt Bernsteinsäure-di(C₁-C₈Alkyl)ester und besonders bevorzugt Bernsteinsäure-di(C₁-C₅Alkyl)ester, des weiteren Bernsteinsäurediarylund Bernsteinsäuremonoarylmonoalkylester, worin Aryl unsubstituiert oder beispielsweise durch ein oder zwei Halogenreste, C₁-C₆Alkyl oder C₁-C₆Alkoxy substituiert sein kann. Bevorzugt steht Aryl für Phenyl.
Besonders bevorzugt sind Bernsteinsäurediester wie Bernsteinsäuredimethylester, -diethylester, - dipropylester, - dibutylester, -dipentylester, -diheptylester, -dioctylester, -diisopropylester, -diheptylester, -di-sek.-butylester, -di-tert.-butylester, -di-tert.-amylester, -di-[1,1-dimethylbutyl]-ester, -di-[1,1, 3, 3-tetramethylbutyl]-ester, -di-[1,1-dimethylpentyl]-ester, -di-[1-methyl-1-butyl]-ester, -di-[1,1-dimethylpentyl]-ester, -di-[1-methyl-1-ethyl-butyl]-ester, -di-[1,1-diethylpropyl]-ester, -diphenylester, -di-[4-methylphenyl]-ester, -di-[2-methylphenyl]-ester, -di-[4-chlorophenyl]-ester, -di-[2,4-chlorophenyl]-ester, oder -monoethylmonophenylester.

Die oben aufgeführten Bernsteinsäurediester sind bekannte und teilweise käufliche Verbindungen.

Gewünschtenfalls kann man den erfindungsgemässen Pigment-Zusammensetzungen rheologieverbesserende Verbindungen zufügen.

Daher betrifft eine weitere bevorzugte Ausgestaltung der vorliegenden Erfindung Zusammensetzungen enthaltend die erfindungsgemässen Pigment-Zusammensetzungen und rheologieverbesserende Verbindungen

Die verwendete Menge an rheologieverbesserenden Verbindungen zur Menge der Pigment-Zusammensetzungen liegt im allgemeinen im Bereich von 0,1 Gew.-% bis 20 Gew.-%, bevorzugt von 0,5 Gew.-% bis 10 Gew.-%.

Rheologieverbesserende Verbindungen sind bekannt und stehen beispielsweise für Diketopyrrolopyrrol Derivate oder Zusammensetzungen enthaltend Diketopyrrolopyrrol Derivate, insbesondere Diketopyrrolopyrrolsulfonsäuresalze wie beispielsweise in GB-2 238 550, US 4,791,204, US 4,914,211, GB 430875, US 5,271,759, US 5,785,750 oder US 5,786,487 beschrieben, oder aminosubstituierte Diketopyrrolopyrrole, wie aus US 5,334,727, US 5,200528, US 5,685,901, US 5,342,955, US 5,424,452 oder US 6,066,202 bekannt, oder silansubstituierte Diketopyrrolopyrrole, wie aus US 5,482,547 bekannt. Femer stehen rheologieverbesserende Verbindungen beispielsweise für Polymere, wie sie aus US 5,145,524, US 5,685,901 oder US 5,679,148 bekannt sind oder ChelatKomplexe, wie in US 5,685,901 beschrieben oder anorganische Verbindungen, die als Beschichtung verwendet werden, wie sie beipielsweise aus US 4,880,472, US 4,808,230, US 4,889,562, US 5,522,925 oder US 5,641,350 bekannt sind oder Quinacridon-Derivate, wie sie beispielsweise aus US 5,827,364 bekannt sind oder Perylenadditive, wie in EP 1029899 beschrieben.

Üblicherweise kann die rheologieverbesserende Verbindung während oder nach der Herstellung der Pigment-Zusammensetzungen zugefügt werden.

Daher betrifft eine weitere bevorzugte Ausführungsform des erfindungsgemässen Verfahrens ein Verfahren zur Herstellung der Zusammensetzungen enthaltend die erfindungsgemässen Pigment-Zusammensetzungen und rheologieverbesserende Verbindungen durch Umsetzung von Bemsteinsäurediestem mit unterschiedlichen Benzonitrilen in einem organischen Lösungsmittel in Gegenwart einer Base bei erhöhter Temperatur, indem man die Molanteile der Benzonitrile in einem Bereich von 90 bis 15 Mol % 4-Methylbenzonitril zu 10 bis 85 Mol-% 3-Methylbenzonitril wählt und in G egenwart von rheologieverbesserenden Verbindungen umsetzt.

In der Regel werden die Pigment-Zusammensetzungen mit den rheologieverbesserenden Verbindungen durch die üblichen Methoden des Vermischens in Kontakt gebracht.

Des weiteren betrifft eine bevorzugte Ausführungsform der vorliegenden Erfindung Zusammensetzungen enthaltend die Pigment-Zusammensetzungen mit den rheologieverbesserenden Verbindungen, die erhältlich sind nach dem erfindungsgemässen Verfahren.

Gewünschtenfalls kann man den erfindungsgemässen Pigment-Zusammensetzungen Texturschutzmittel zufügen.

Geeignete Texturschutzmittel sind beispielsweise Fettsäuren mit mindestens 12 Kohlenstoffatomen wie insbesondere Stearin- oder Behensäure, Stearin- oder Behensäureamid, Salze der Stearin- oder Behensäure wie Magnesium-, Zink- oder Aluminium-Stearinat oder Behenat, ferner quaternäre Ammoniumverbindungen wie insbesondere Tri-(C₁-C₄)-alkylbenzylammoniumsalz wie Trimethyl-, Triethyl-, Tri-n-propyl-, Tri-isopropyl-, Tri-n-butyl-, Tri-sek.-butyl-, Tri-tert.-butylbenzylammoniumsalz, ferner Weichmacher wie epoxidiertes Sojabohnenöl, Wachse wie Polyethylenwachs, Harzsäuren wie Abietinsäure, Kolophoniumseife, hydriertes oder dimerisiertes Kolophonium, (C₁₂-C₁₈)-Paraffindisulfonsäure, Alkylphenole oder Alkohole wie Stearylalkohol. Ferner Lauryl- oder Stearylamin sowie aliphatische 1,2-Diole wie Dodecandiol-1,2.

Bevorzugte Texturschutzmittel sind Lauryl- oder Stearylamin, aliphatische 1,2-Diole, Stearinsäure deren Amide, Salze oder Ester, epoxidiertes Sojabohnenöl, Wachse oder Harzsäuren.

Solche Zusatzstoffe können durch in Mengen von 0,05 bis 20, bevorzugt 1 bis 10 Gew.% bezogen auf die erfindungsgemässe Zusammensetzung, vor, während oder nach deren Herstellung zugegeben werden.

Die erfindungsgemässen Pigment-Zusammensetzungen können zum Pigmentieren von organischem Material, insbesondere nieder- oder hochmolekularem organischen Material verwendet werden.

Eine Ausführungsform der Erfindung betrifft die Verwendung der erfindungsgemässen Pigment-Zusammensetzung zum Pigmentieren von organischem Material.

Eine weitere Ausführungsform der Erfindung betrifft ein Verfahren Pigmentieren von organischem Material, indem man organisches Material mit einer färberisch wirksamen Menge der erfindungsgemässen Pigment-Zusammensetzungen miteinander vermischt. Gewünschtenfalls können die bei der Synthese anfallenden Produkte in eine disperse Form überführt werden. Dies kann auf an sich bekannte Weise geschehen. Je nach Verbindung und Verwendungszweck erweist es sich als vorteilhaft, die Farbmittel als Toner oder in Form von Präparaten zu verwenden.

Niedermolekulares organisches Material kann beispielsweise für Mineralöl, Schmierfett oder Wachs stehen.

Das hochmolekulare Material mit einem Molekulargewicht von (Mw) von 10⁴ bis 10⁸ g/mol kann beispielsweise Kunststoffe und/oder Naturstoffe bedeuten. Es kann sich zum Beispiel um Naturharze oder trockene Öle, Kautschuk oder Casein oder um abgewandelte Naturstoffe wie Chlorkautschuk, ölmodifizierte Alkydharze, Viscose, um Celluloseether oder -ester wie Ethylcellulose, Celluloseacetat, -propionat, oder -butyrat, Celluloseactobutyrat sowie Nitrocellulose, handeln, insbesondere aber um vollsynthetische organische Polymere (Duround Thermoplaste), wie sie durch Polymerisation, zum Beispiel durch Polykondensation oder Polyaddition erhalten werden können. Zur Klasse der Polymeren gehören beispielsweise Polyolefine wie Polyethylen, Polypropylen, Polyisobutylen, ferner substituierte Polyolefine wie Polymerisate von Monomeren wie Vinylchlorid, Vinylacetat, Styrol, Acrylnitril, Acrylsäureester, Methacrylsäureester, Fluorpolymerisate wie zum Polyfluorethylen, Polytrifluorchlorethylen oder Tetrafluorethylen/Hexafluoropropylen-Mischpolymerisat sowie Copolymerisate der erwähnten Monomeren. Aus der Reihe der Polyadditions- und Polykondensationsharze kann man beispielsweise Kondensationsprodukte von Formaldehyd mit Phenolen, die sogenannten Phenoplaste, und Kondensationsprodukte von Formaldehyd und Harnstoff oder Thioharnstoff, des weiteren Melamin, die sogenannten Aminoplaste, ferner die als Lackharze verwendeten Polyester, entweder gesättigte wie Alkydharze, als auch ungesättigte wie Maleinharze, ferner lineare Polyester, Polycarbonate, Polyphenylenoxide oder Silikone, Silikonharze verwenden. Das hochmolekulare organische Material kann auch ein teilkristalliner oder amorpher Kunststoff sein wie LLDPE (lineares Polyethylen niederer Dichte). Unter "teilkristalline Kunststoffe" werden solche verstanden, welche bei der Erstarrung kleine kristalline Kerne oder Aggregate (zum Beispiel Sphärulite oder Quadrite) bilden, inklusive solche, welche dies nur in Gegenwart von Nukleierungsmitteln (zum Beispiel organischen Pigmenten) tun.

Kunststoffe können für thermoplastische hochmolekulare organische Materialien mit einem Molekulargewicht (M_{w}) von 10⁴ bis 10⁸, bevorzugt von 10⁵ bis 10⁷ g/mol, stehen. Sofern es sich bei den Kunststoffen um teilkristalline Kunststoffe handelt, besitzen sie üblicherweise einen Kristallinitätsgrad (X_{c}) von 10 bis 99,9%, bevorzugt von 40 bis 99%, besonders bevorzugt von 80 bis 99%. Bevorzugte teilkristalline Kunststoffe sind Homopolymere, Blockoder statistische Copolymere und Terpolymere von Ethylen, Propylen, Butylen, Styrol und/oder Divinylbenzol, insbesondere α-Olefine wie HDPE (high density polyethylen), LDPE (low density polyethylen), Polypropylen und Polystyrol, sowie auch Polyester, wie Polyethylenterephthalat (PET) und thermoplastische lonomere. Besonders bevorzugte teilkristalline Kunststoffe sind Polyolefine, insbesondere Polyethylen hoher Dichte und Polypropylen. Die teilkristallinen Kunststoffe können gegebenenfalls auch Additive in üblichen Mengen enthalten, zum Beispiel Stabilisatoren, optische Aufheller, Füll- und/oder Gleitmittel.

Die erwähnten hochmolekularen Verbindungen können einzeln oder in Gemischen als plastische Massen, Schmelzen oder in Form von Spinnlösungen vorliegen. Sie können auch in Form ihrer Monomeren oder im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die vorliegende Erfindung betrifft deshalb des weiteren die Verwendung der erfindungsgemässen Pigment-Zusammensetzungen zur Herstellung von Tinten, für Drucktinten in Druckverfahren, für den Flexodruck, Siebdruck, Verpackungsdruck, Sicherheitsfarbdruck, Tiefdruck oder Offsetdruck, für Druckvorstufen sowie für Textildruck, für Büro-, Heimanwendungen oder graphische Anwendungen wie beispielsweise für Papierwaren, für Kugelschreiber, Filzstifte, Faserstifte, Pappe, Holz, (Holz-)Beizen, Metall, Stempelkissen oder Tinten für Impact-printing Verfahren (mit Stossdruckfarbbänder), für die Herstellung von
Lacken, für den Industrie- oder Gewerbegebrauch, für die Textildekoration und die industrielle Markierung, für Walzlacke oder Pulverlacke oder für Automobillacke, für highsolids (lösungsmittelarme), wasserhaltige oder metallische Lacke oder für pigmentierte Formulierungen für wässerige Anstrichfarben, für Mineralöle, Schmierfette oder Wachse, für die Herstellung von
gefärbte Kunststoffen für Beschichtungen, Fasern, Platten oder Formträgern, für die Herstellung von
non-impact-printing Material (Nicht-Stossdruckmaterial) für digital-printing (Digitale Druckverfahren), für das thermische Wachs-Transfer-Druck-Verfahren, das Tintenstrahldruck-Verfahren oder für das thermische Transferdruck-Verfahren, ausserdem für die Herstellung von
polymeren Farbpartikel, von Tonern, dry copy toners (Trockenkopier-Farblacke), liquid copy toners (Flüssigkopier-Farblacke) oder elektrophotographische Toner.

Des weiteren betrifft die vorliegende Erfindung Tinten, enthaltend hochmolekulares organisches Material und eine färberisch wirksame Menge der erfindungsgemässen Zusammensetzung.

Verfahren zur Herstellung von Tinten insbesondere für den Tintenstrahldruck sind allgemein bekannt und zum Beispiel in US 5,106,412 beschrieben.
Man kann beispielsweise die Tinten herstellen, indem man die erfindungsgemässen Pigment-Zusammensetzungen mit polymeren Dispergierungsmitteln vermischt.
Das Vermischen der erfindungsgemässen Pigment-Zusammensetzungen mit dem polymeren Dispergierungsmittel erfolgt bevorzugt nach allgemein bekannten Methoden des Vermischens wie Rühren oder Mixen, vorzugsweise empfiehlt es sich einen Intensivmixer (z.B.wie der Marke Ultra-Turrax®) zu verwenden.
Beim Vermischen der erfindungsgemässen Pigment-Zusammensetzungen mit polymeren Dispergierungsmitteln verwendet man zweckmässig ein organisches Lösungsmittel, insbesondere ein mit Wasser mischbares organisches polares, protisches oder aprotisches Lösunsmittel wie beispielsweise Alkohole oder Ketone.

Zweckmässig wählt man das Gewichtsverhältnis der erfindungsgemässen Pigment-Zusammensetzungen zur Tinte im Bereich von 0,0001 bis 75 Gew.-%, bevorzugt von 0,001 bis 50 Gew.-%, bezogen auf das Gesamtgewicht der Tinte.

Die vorliegende Erfindung betrifft deshalb auch ein Verfahren zur Herstellung von Tinten, indem man hochmolekulares organisches Material mit einer färberisch wirksamen Menge der erfindungsgemässen Pigment-Zusammensetzungen miteinander vermischt.

Ferner betrifft die vorliegende Erfindung Farbmittel enthaltend hochmolekulares organisches Material und eine erfindungsgemässe Zusammensetzung in einer färberisch wirksamen Menge.

Zudem betrifft die vorliegende Erfindung ein Verfahren zur Herstellung von Farbmittel, indem man ein hochmolekulares organisches Material und eine färberisch wirksame Menge der erfindungsgemässen Zusammensetzung vermischt.

Des weiteren betrifft die vorliegende Erfindung gefärbte Kunststoffe oder polymere Farbpartikel enthaltend hochmolekulares organisches Material und die erfindungsgemässe Zusammensetzung in einer färberisch wirksamen Menge.

Zudem betrifft die vorliegende Erfindung ein Verfahren zur Herstellung gefärbter Kunststoffe oder polymerer Farbpartikel, indem man ein hochmolekulares organisches Material und eine färberisch wirksame Menge der erfindungsgemässen Zusammensetzung miteinander vermischt.

Die Einfärbung der hochmolekularen, organischen Substanzen mit den erfindungsgemässen Pigment-Zusammensetzungen erfolgt beispielsweise derart, dass man ein solches Farbmittel gegebenenfalls in Form von Masterbatches, diesen Substraten unter Verwendung von Walzwerken, Misch- oder Mahlapparaten zumischt, wodurch das Farbmittel im hochmolekularen Material gelöst oder fein verteilt wird. Das hochmolekulare organische Material mit dem beigemischten Farbmittel wird hierauf nach an sich bekannten Verfahren verarbeitet, wie beispielsweise Kalandrieren, Pressen, Strangpressen, Streichen, Spinnen, Giessen oder durch Spritzguss, wodurch das eingefärbte Material seine endgültige Form bekommt. Das Beimischen des Farbmittels kann auch unmittelbar vor dem eigentlichen Verarbeitungsschritt durchgeführt werden, indem beispielsweise ein pulverförmiges erfindungsgemässes Farbmittel und ein granuliertes hochmolekulares organisches Material, sowie gegebenenfalls auch Zusatzstoffe wie beispielsweise Additive, gleichzeitig direkt der Einlasszone einer Strangpresse kontinuierlich zudosiert werden, wo das Einmischen noch knapp vor der Verarbeitung stattfindet. Im allgemeinen ist jedoch ein vorgängiges Einmischen des Farbmittels ins hochmolekulare organische Material bevorzugt, da gleichmässigere Resultate erhalten werden können. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können zum Beispiel Ester der Phosphorsäure, Phthalsäure oder Sebacinsäure dienen. Die Weichmacher können im erfindungsgemässen Verfahren vor oder nach der Einverleibung des Farbmittels in die Polymeren eingearbeitet werden. Es ist ferner möglich, zwecks Erzielung verschiedener Farbtöne den hochmolekularen, organischen Stoffen neben den erfindungsgemässen Pigment-Zusammensetzungen Bestandteile wie Weiss-, Bunt- oder Schwarzpigmente in beliebigen Mengen zuzufügen.

Zum Einfärben von Lacken und Druckfarben werden die hochmolekularen organischen Materialien und die erfindungsgemässen Pigment-Zusammensetzungen gegebenenfalls zusammen mit Zusatzstoffen wie Füllmitteln, Farbstoffen, Pigmenten, Siccativen (Trocknungsmitteln) oder Weichmachern, in einem gemeinsam organischen Lösungsmittel oder Lösungsmittelgemisch fein dispergiert oder gelöst. Man kann dabei so verfahren, dass man die einzelnen Komponenten für sich oder auch mehrere gemeinsam dispergiert oder löst, und erst hierauf alle Komponenten zusammenbringt. Die Verarbeitung erfolgt nach üblichen Methoden, beispielsweise durch Spritzen, Filmziehen oder einer der vielen Druckmethoden, worauf der Lack oder die Druckfarbe, gegebenenfalls nach vorheriger Trocknung, zweckmässig thermisch oder durch Bestrahlung gehärtet wird.

Handelt es sich beim zu färbenden hochmolekularen Material um einen Lack, so kann es sich um einen gewöhnlichen Lack, oder auch um einen Speziallack, beispielsweise einen Automobillack, handeln.

Bevorzugt ist die Einfärbung von thermoplastischen Kunststoffen, insbesondere auch in Form von Fasern, sowie von Druckfarben. Bevorzugte, erfindungsgemäss einfärbbare hochmolekulare organische Materialien sind ganz allgemein Polymere mit einer Dielektrizitätskonstante ≥ 2,5, insbesondere Polyester, Polycarbonat (PC), Polystyrol (PS), Polymethylmethacrylat (PMMA), Polyamid, Polyethylen, Polypropylen, Styrol/Acrylnitril (SAN) oder Acrylnitril/Butadien/Styrol (ABS). Besonders bevorzugt sind Polyester, Polycarbonat, Polystyrol und PMMA. Ganz besonders bevorzugt sind Polyester, Polycarbonat oder PMMA, insbesondere aromatische Polyester, welche durch Polykondensation von Terephthalsäure erhalten werden können, wie beispielsweise Polyethylenterephthalat (PET) oder Polybutylenterephthalat (PBTP).

Des weiteren besonders bevorzugt ist die Einfärbung von niedermolekularem organischen Material wie Mineralölen, Schmierfetten und Wachsen mit den erfindungsgemässen Verbindungen.

Ausserdem betrifft die vorliegende Erfindung Non-impact-printing Material, enthaltend hochmolekulares organisches Material und eine erfindungsgemässe Zusammensetzung in einer färberisch wirksamen Menge.

Zudem betrifft die vorliegende Erfindung ein Verfahren zur Herstellung von Non-impact-printing Material, indem man ein hochmolekulares organisches Material und eine färberisch wirksame Menge der erfindungsgemässen Zusammensetzung miteinander vermischt.

Zudem betrifft die vorliegende Erfindung Toner enthaltend hochmolekulares organisches Material und eine erfindungsgemässen Pigment-Zusammensetzungen in einer färberisch wirksamen Menge.

Ausserdem betrifft die vorliegende Erfindung Verfahren zur Herstellung von Tonern, indem man ein hochmolekulares organisches Material und eine färberisch wirksame Menge der erfindungsgemässen Pigment-Zusammensetzungen miteinander vermischt.

In einer besonderen Ausführungsform des erfindungsgemässen Verfahrens werden Toner, Lacke, Tinten oder gefärbte Kunststoffe hergestellt, indem man Masterbatches von Tonern, Lacken, Tinten oder gefärbten Kunststoffen in Walzwerken, Misch- oder Mahlapparaten bearbeitet.

Eine färberisch wirksame Menge der erfindungsgemässen Zusammensetzung bedeutet in der vorliegenden Erfindung in der Regel 0,0001 bis 99,99 Gew.-%, bevorzugt 0,001 bis 50 Gew.-% und besonders bevorzugt 0,01 bis 50 Gew.-% bezogen auf das Gesamtgewicht des damit gefärbten oder pigmentierten Materials.

Die Erfindung betrifft ferner ein Verfahren zur Herstellung von gefärbten Kunststoffen, insbesondere zur Herstellung von in der Masse gefärbten Kunststoffen, indem man die erfindungsgemässen Pigment-Zusammensetzungen mit dem Kunststoff mischt.

In der Regel kann man die erfindungsgemässe Zusammensetzung mit einem Kunststoffgranulat oder -pulver mischen und/oder extrudieren. Gewünschtenfalls kann man die Mischung im Extruder zu Fasern, Folien oder Granulaten verarbeiten. Letztere können dann beispielsweise im Spritzgussverfahren zu Gegenständen verformt werden.

Eine weitere Ausgestaltung der vorliegenden Erfindung betrifft daher ein Verfahren von, bevorzugt in der Masse gefärbtem Kunststoff, insbesondere teilkristallinem Kunststoff, indem die erfindungsgemässen Pigment-Zusammensetzungen mit dem Kunststoff im Spritzgussverfahren formt.

Die Bestandteile der Spritzgussformulierung können der Spritzgussmaschine bereits vorgemischt, oder auch einzeln gleichzeitig zudosiert werden. Es ist auch möglich, zwei oder mehr Komponenten, gewünschtenfalls auch Additive, vorzumischen, und dann deren Gemisch zusammen mit anderen, einzeln oder ebenfalls vorgemischten Komponenten zuzudosieren.

In einer besonderen Ausgestaltung der erfindungsgemässen Verfahren betrifft deren Durchführung in Masterbatches.

Im Masterbatch beträgt die Konzentration der erfindungsgemässen Zusammensetzung vorzugsweise 5 bis 70 Gew.-% bezogen auf das Gesamtgewicht der erfindungsgemässen Zusammensetzung und dem Kunststoff.

In der vorliegenden Erfindung ist es gelungen, die guten applikatorischen Eigenschaften der Verbindungen (I), (II) und (III) beizubehalten sowie deren anwendungstechnisches Einsatzgebiet aufgrund der gelbstichigeren roten Nuance zu erweitern.

Im einzelnen wurde gefunden, dass sich die erfindungsgemässen ternären DPP-Pigment-Zusammensetzungen, beispielsweise in thermoplastischen oder duroplastischen Kunststoffen, Fasern, Lacken oder Druckfarben, durch einen reinen Farbton, hohe Farbstärke, hohe Sättigung und hohe Opazität, gute Überlackier-, Migrations-, Reib-, Licht-, Wetterechtheit sowie durch einen guten Glanz auszeichnen. Besonders vorteilhaft sind mit den erfindungsgemässen Pigment-Zusammensetzungen sehr opake, deckende, gelbstichig rote bis orange Färbungen von hochmolekularen oder niedermolekularen Materialien erhältlich. Opake Färbungen sind schon mit kleinen Farbmengen der erfindungsgemässen Pigment-Zusammensetzungen zu errreichen. Der geringe Farbmitteleinsatz wirkt sich wirtschaftlich vorteilhaft aus. Die erfindungsgemässen Pigment-Zusammensetzungen sind insbesondere für Industrielacke geeignet.

### Beispiele:

Die Analysenproben zur Messung des Farbtonwinkels *h* und der Sättigung C* sowie des Deckvermögens ΔE^{*}-S/W werden anhand von PVC-Pressplatten (1 mm Dicke) enthaltend 0,5 Gew.-% der jeweiligen Pigment-Zusammensetzung der Beispiele 1 bis 11 werden nach DIN 53 775 Teil 7 hergestellt.

Das Deckvermögen ΔE^{*}-S/W wird nach DIN 55984 gemessen.

Alle Farbmessungen werden mittels eines Minolta CM-508i®Spektrophotometers (d/8 Geometrie, unter Einschluss des Glanzes, Lichtart D65, Beobachter 10°) durchgeführt.

Die Röntgenspektren werden nach üblichen Methoden mit Hilfe eines Siemens D500® Röntgen-Diffraktometers (CuK_{α}-Strahlung) bestimmt.

### a) Die Messung des Farbtonwinkels h und der Sättigung C von 1 mm PVC-Walzfolien Vormischung:

Pigment, 0,4 g, wird mit einer Grundmischung, 14 g, 30 Minuten gemischt, und anschliessend mit 26 g PVC, Vinnolit E@ 70 G, (Vinnolit Kunststoff GmbH, D-85737-lsmaning) langsam gerührt.

| Grundmischung | | Teile |
|---|---|---|
| DIDP (Diisodecylphthalat) Palatinol Z® | H. Haffner GmbH, D-71679 Asperg | 92,2 |
| Rheoplast 39® | Ciba Spezialitätenchemie | 4,2 |
| IRGASTAB BZ 561® | Ciba Spezialitätenchemie | 3,6 |

### Herstellung von Walzfolien:

Die oben erhaltene Mischung aus PVC und Pigment/Grundmischung wird nach folgenden drei Schritten bei einer Walztemperatur von 165°C (je Walze) in einem 2-Walzwerk (Modell Collin, D-85560 Ebersberg) gewalzt:
a) Warmwalzen 8 min (nach jeder Minute Walzfolie umlegen) Walzenspalt 0,4 mm
b) Walzen bei erhöhten Scherkräften 20 Passagen bei 75°C
c) Warmwalzen 3 min
   Walzenspalt 0,4 mm

### b) Herstellung von Pressplatten:

Mit einer Plattenpresse (Typ 200 P, Modell Collin, D-85560 Ebersberg) wird die oben hergestellte Walzfolie bei 170°C Presstemperatur während 5 Minuten behandelt. Man erhält Pressplatten mit einer Foliendicke von 1 mm.

Beispiel 1: Eine Mischung aus Natrium, 9,2 g (0,4 mol), und tert.-Amylalkohol, 160 ml, wird 10 Stunden bei 105 bis 115°C gerührt. Danach werden 4-Methylbenzonitril, 16,4 g (0,14 Mol), und 3- Methylbenzonitril, 7,03 g (0,06 Mol), zugefügt. Nach erfolgter Zugabe wird die Reaktionsmischung auf 105 bis 110°C erhitzt und unter Rühren während 5 Stunden Bernsteinsäurediisopropylester 26,9 g (0,13 Mol) tropfenweise zudosiert. Nach beendeter Zugabe wird die resultierende dunkelrote Suspension noch eine weitere Stunde bei 110°C gerührt und dann auf 20 bis 25 °C abgekühlt. Die Reaktionsmischung wird auf eine Mischung aus Wasser, 200 ml, und Methanol, 200 ml, gegeben und anschliessend 4 Stunden bei Siedetemperatur gerührt. Das Reaktionsgemisch wird dann auf 20 bis 25 °C abgekühlt und filtriert. Der Filterrückstand wird mit einer Mischung aus Methanol und Wasser gewaschen. Der gewaschene Filterrückstand wird ca. 12 Stunden im Vakuum bei 80°C getrocknet. Es werden 24,4 g (77,2 % der Theorie) eines roten Pulvers erhalten, das in PVC zu einer opaken, gelbstichig roten Färbung führt.

| Elementaranalyse | C | H | N |
|---|---|---|---|
| Berechnet: | 75,93 | 5,10 | 8,85 |
| Gefunden: | 75,41 | 5,18 | 8,74 |

Das Röntgenbeugungsdiagramm ist durch folgende Daten gekennzeichnet:

| Netzebenenabstände (d in Å) | Doppelglanzwinkel (2Θ) | relative Intensität (%) |
|---|---|---|
| 29,14 | 3,03 | 6 |
| 11,39 | 7,75 | 100 |
| 7,06 | 12,52 | 6 |
| 5,69 | 15,55 | 26 |
| 4,48 | 19,82 | 11 |
| 4,05 | 21,92 | 13 |
| 3,81 | 23,35 | 12 |
| 3,64 | 24,46 | 7 |
| 3,34 | 26,64 | 82 |
| 2,86 | 31,22 | 10 |
| 2,74 | 32,64 | 8 |
| 2,17 | 41,65 | 4 |

Das Röntgenbeugungsdiagramm der Wirtverbindung der Formel I (hergestellt nach US 4,415,685, Beispiel 28) ist durch folgende Daten gekennzeichnet:

| Netzebenenabstände (d in Å) | doppelte Glanzwinkel (2Θ) | relative Intensität (%) |
|---|---|---|
| 11,89 | 7,43 | 100 |
| 7,02 | 12,59 | 5 |
| 5,70 | 15,53 | 30 |
| 4,41 | 20,14 | 10 |
| 4,01 | 22,15 | 11 |
| 3,88 | 22,88 | 11 |
| 3,66 | 24,32 | 8 |
| 3,33 | 26,71 | 76 |
| 2,86 | 31,21 | 11 |
| 2,75 | 32,58 | 8 |
| 2,18 | 41,38 | 4 |

Beispiele 2-9: Das Verfahren zur Herstellung der Pigment-Zusammensetzungen der Beispiele 2 bis 9 entspricht dem des Beispiels 1, wobei lediglich die Mol-Einsatzmengen des 4-Methylbenzonitril und des 3-Methylbenzonitril variiert sind.

| | 4-Methylbenzonitril in mol | 3-Methylbenzonitril in mol | C* | *h* | ΔE*-S/W |
|---|---|---|---|---|---|
| Beispiel 1 | 0,14 | 0,06 | 68,2 | 37,6 | 2,0 |
| Beispiel 2 | 0,1 | 0,1 | 70,2 | 37,4 | 2,8 |
| Beispiel 3 | 0,16 | 0,04 | 69,8 | 36,3 | 2,1 |
| Beispiel 4 | 0,17 | 0,03 | 68,2 | 35,8 | 2,0 |
| Beispiel 5 | 0,18 | 0,02 | 66,9 | 35,2 | 1,6 |
| Beispiel 6 | 0,06 | 0,14 | 69,1 | 40,1 | 4,2 |
| Beispiel 7 | 0,48 | 0,12 | 68,8 | 39,4 | 4,2 |
| Beispiel 8 | 0,04 | 0,16 | 59,7 | 32,1 | 4,2 |
| Beispiel 9 | 0,05 | 0,15 | 64,6 | 36,1 | 4,3 |

Das Röntgenbeugungsdiagramm der Pigment-Zusammensetzung des Beispiels 6 ist durch folgende Daten gekennzeichnet:

| Netzebenenabstände (d in Å) | Doppelglanzwinkel (2Θ) | relative Intensität (%) |
|---|---|---|
| 11,43 | 7,72 | 100 |
| 7,12 | 12,42 | 15 |
| 6,41 | 13,78 | 12 |
| 5,75 | 15,39 | 15 |
| 5,12 | 17,30 | 7 |
| 4,62 | 19,15 | 19 |
| 4,19 | 21,16 | 13 |
| 3,76 | 23,62 | 11 |
| 3,41 | 26,03 | 87 |
| 3,15 | 28,26 | 6 |
| 2,77 | 32,27 | 7 |
| 2,21 | 40,62 | 4 |
| 2,14 | 42,14 | 5 |

Das Röntgenbeugungsdiagramm der Wirtverbindung der Formel II (hergestellt nach US 4.415.685. Beispiel 31) ist durch folgende Daten gekennzeichnet:

| Netzebenenabstände (d in Å) | Doppelglanzwinkel (2Θ) | relative Intensität (%) |
|---|---|---|
| 11,20 | 7,88 | 95 |
| 7,07 | 12,49 | 9 |
| 6,31 | 14,01 | 12 |
| 5,71 | 15,49 | 13 |
| 4,65 | 19,05 | 13 |
| 4,20 | 21,10 | 10 |
| 3,78 | 23,78 | 8 |
| 3,41 | 26,06 | 100 |
| 2,76 | 32,34 | 7 |

### Beispiel 10:

Eine Mischung aus Natrium, 69 g (3 mol), und tert.-Amylalkohol, 591,3 ml, wird 18 Stunden bei 105 bis 115°C gerührt. Danach werden 4-Methylbenzonitril, 52,7 g (0,45 Mol), und 3-Methylbenzonitril, 123 g (1,05 Mol) sowie Isophthalodinitril, 0,38 g (0,003 mol), und tert.-Amylalkohol, 16,2 g, zugefügt. Nach erfolgter Zugabe wird die Reaktionsmischung auf 105 bis 110°C erhitzt und unter Rühren während 4 Stunden Bernsteinsäurediisopropylester 197,3 g (0,975 Mol) tropfenweise zudosiert. Nach beendeter Zugabe wird die resultierende dunkelrote Suspension noch 1,5 Stunden bei 110°C gerührt und dann auf 20 bis 25 °C abgekühlt. Die Reaktionsmischung wird auf eine Mischung aus Wasser, 500 ml, und Methanol, 800 ml, tert-Amylalkohol, 200 g, gegeben und anschliessend 4 Stunden bei Siedetemperatur gerührt. Das Reaktionsgemisch wird dann auf 20 bis 25 °C abgekühlt und filtriert. Der Filterrückstand wird mit einer Mischung aus Methanol, ca. 5 l, und Wasser, ca. 3 I, gewaschen. Der gewaschene Filterrückstand wird ca. 12 Stunden im Vakuum bei 80°C getrocknet. Es werden 152,8 g (64,4 % der Theorie) der Pigment-Zusammensetzung als rotes Pulvers erhalten, das in PVC zu einer opaken, gelbstichig roten Färbung führt.

### Beispiel 11:

Zu einer Mischung der Pigment-Zusammensetzung aus Beispiel 10 (jedoch nicht getrocknet, sondern als wässriger Presskuchen mit einem Pigmentgehalt von 33,4%), 65 g (0,068 mol), und Wasser, 390 g, wird eine Mischung eines Diketopyrrolopyrrol Sulfonatsalzes, hergestellt entsprechend Beispiel 1b aus GB-2 238 550, 0,59 g, in Wasser, 10 g, bei 50°C, zugetropft und anschliessend noch 1 Stunde gerührt. Zu dieser Mischung wird eine Mischung aus Calciumdichlorid, 0,10 g, gelöst in Wasser, 10 g, zugetropft. Anschliessend wird die erhaltene Mischung noch 2 Stunden bei 25°C gerührt, filtriert, dann mit Wasser gewaschen und anschliessend bei 80°C und 120 mbar für ca. 10 Stunden getrocknet. Es werden 20,3 g einer Zusammensetzung erhalten, die die erfindungsgemässe Pigment-Zusammensetzung enthält.

## Patentansprüche

1. Ternäre Pigment-Zusammensetzungen aus Verbindungen der Formeln (I), (II) und (III), 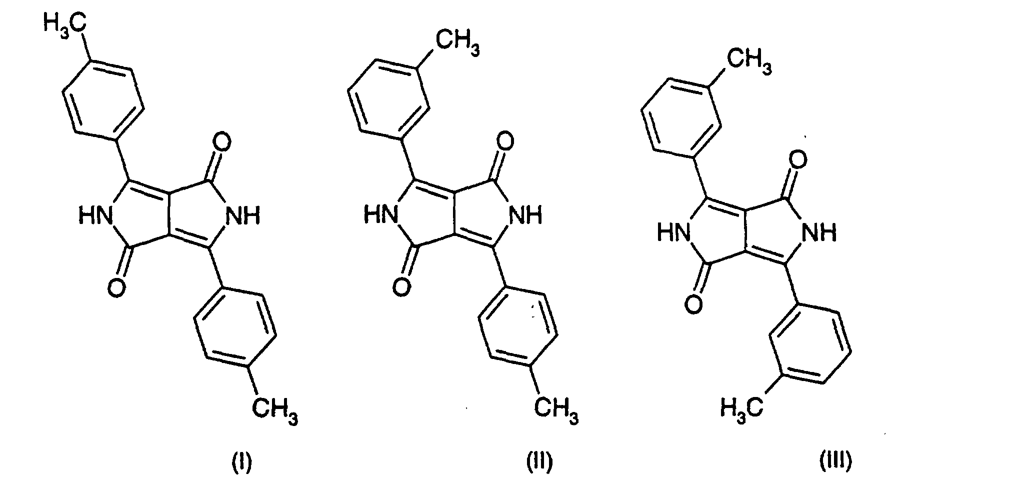 erhältlich durch Umsetzung von Bernsteinsäurediestem mit 90 bis 15 Mol-% 4-Methylbenzonitril und 10 bis 85 Mol-% 3-Methylbenzonitril, wobei die Molanteile der 4-Methylund 3-Methylbenzonitrile Benzonitrile in der Summe 100 Mol-% ergeben.

2. Pigment-Zusammensetzungen nach Anspruch 1, mit einem Deckvermögen, ΔE^{*}-S/W von < 8 .

3. Pigment-Zusammensetzungen nach Anspruch 1, mit einem Farbtonwinkel *h* im Bereich von 35 bis 42, erhältlich durch Umsetzung von Bernsteinsäurediestem mit 80 bis 55 Mol-% 4-Methylbenzonitril zu 20 bis 45 Mol-% 3-Methylbenzonitril.

4. Pigment-Zusammensetzungen nach Anspruch 3, die einen Sättigungswert C* im Bereich von 65 bis 80 besitzen.

5. Pigment-Zusammensetzungen nach Anspruch 1 mit einem Farbtonwinkel *h* im Bereich von 35 bis 45, erhältlich durch Umsetzung von Bernsteinsäurediestern mit 45 bis 25 Mol-% 4-Methylbenzonitril und 55 bis 75 Mol-% 3-Methylbenzonitril.

6. Pigment-Zusammensetzungen nach Anspruch 1, erhältlich durch Umsetzung von Bernsteinsäurediestem mit 80 bis 55 Mol-% 4-Methylbenzonitril zu 20 bis 45 Mol-% 3-Methylbenzonitril, deren Kristallgitter im wesentlichen dem der Verbindung (I) entspricht.

7. Pigment-Zusammensetzungen nach Anspruch 1, erhältlich durch Umsetzung von Bernsteinsäurediestern mit 45 bis 25 Mol-% 4-Methylbenzonitril zu 55 bis 75 Mol-% 3-Methylbenzonitril, deren Kristallgitter im wesentlichen dem der Verbindung (II) entspricht.

8. Verfahren zur Herstellung der Pigment-Zusammensetzungen nach Anspruch 1, durch Umsetzung von Bemsteinsäurediestem mit unterschiedlichen Benzonitrilen in einem organischen Lösungsmittel in Gegenwart einer Base bei erhöhter Temperatur, **dadurch gekennzeichnet, dass** man die Molanteile der Benzonitrile in einem Bereich von 90 bis 15 Mol-% 4-Methylbenzonitril zu 10 bis 85 Mol-% 3-Methylbenzonitril wählt.

9. Zusammensetzungen enthaltend Pigment-Zusammensetzungen nach einem der Ansprüche 1 bis 7 oder hergestellt nach Anspruch 8.

10. Verwendung der Pigment-Zusammensetzung nach einem der Ansprüche 1 bis 7 oder hergestellt nach Anspruch 8 oder der Zusammensetzung nach Anspruch 9 zum Pigmentieren von organischem Material.

## Claims

1. A ternary pigment composition comprising compounds of formulae (I), (II) and (III) 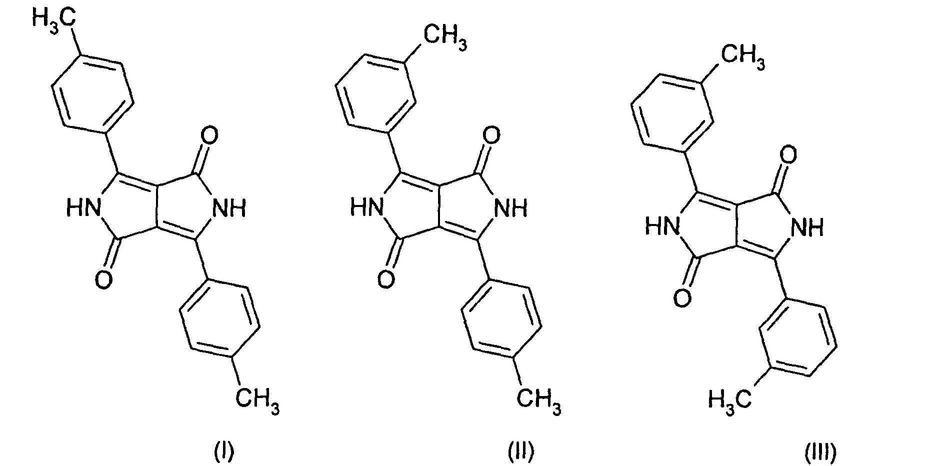 obtainable by the reaction of a succinic acid diester with from 90 to 15 mol % 4-methylbenzonitrile and from 10 to 85 mol % 3-methylbenzonitrile, the molar amounts of the 4-methyl- and 3-methyl-benzonitriles totalling 100 mol %.

2. A pigment composition according to claim 1, having a hiding power ΔE*-S/W of < 8.

3. A pigment composition according to claim 1, having a hue angle *h* in the range from 35 to 42, obtainable by the reaction of a succinic acid diester with from 80 to 55 mol % 4-methylbenzonitrile and from 20 to 45 mol % 3-methylbenzonitrile.

4. A pigment composition according to claim 3, having a saturation value C* in the range from 65 to 80.

5. A pigment composition according to claim 1, having a hue angle h in the range from 35 to 45, obtainable by the reaction of a succinic acid diester with from 45 to 25 mol % 4-methylbenzonitrile and from 55 to 75 mol % 3-methylbenzonitrile.

6. A pigment composition according to claim 1, obtainable by the reaction of a succinic acid diester with from 80 to 55 mol % 4-methylbenzonitrile and from 20 to 45 mol % 3-methylbenzonitrile, the crystal lattice of which composition substantially corresponds to that of compound (I).

7. A pigment composition according to claim 1, obtainable by the reaction of a succinic acid diester with from 45 to 25 mol % 4-methylbenzonitrile and from 55 to 75 mol % 3-methylbenzonitrile, the crystal lattice of which composition substantially corresponds to that of compound (II).

8. A process for the preparation of a pigment composition according to claim 1, by the reaction of a succinic acid diester with different benzonitriles in an organic solvent, in the presence of a base, at elevated temperature, which comprises using the benzonitriles in a molar ratio of from 90 to 15 mol % 4-methylbenzonitrile to from 10 to 85 mol % 3-methylbenzanitrile.

9. A composition comprising a pigment composition according to any one of claims 1 to 7 or a pigment composition that has been prepared according to claim 8.

10. The use of a pigment composition according to any one of claims 1 to 7 or of a pigment composition that has been prepared according to claim 8, or of a composition according to claim 9, for pigmenting organic material.

## Revendications

1. Compositions pigmentaires ternaires constituées de composés ayant les formules (I), (II) et (III) 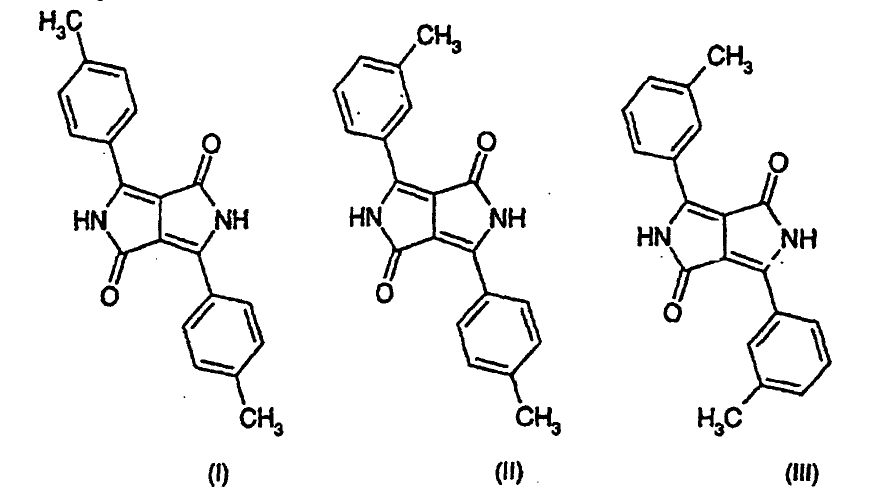 pouvant être obtenues par réaction de diesters de l'acide succinique avec 90 à 15 % en moles de 4-méthylbenzonitrile et 10 à 85 % en moles de 3-méthylbenzonitrile, les proportions en moles des benzonitriles que sont le 4-méthylbenzonitrile et le 3-méthylbenzonitrile faisant en tout 100 % en moles.

2. Compositions pigmentaires selon la revendication 1, ayant un pouvoir couvrant ΔE*-S/W inférieur à 8.

3. Compositions pigmentaires selon la revendication 1, ayant un angle de nuance *h* compris dans la plage de 35 à 42, pouvant être obtenues par réaction de diesters de l'acide succinique avec 80 à 55 % en moles de 4-méthylbenzonitrile pour 20 à 45 % en moles de 3-méthylbenzonitrile.

4. Compositions pigmentaires selon la revendication 1, qui ont une saturation C* comprise dans la plage de 65 à 80.

5. Compositions pigmentaires selon la revendication 1, ayant un angle de nuance *h* compris dans la plage de 35 à 45, pouvant être obtenues par réaction de diesters de l'acide succinique avec 45 à 25 % en moles de 4-méthylbenzonitrile et 55 à 75 % en moles de 3-méthylbenzonitrile.

6. Compositions pigmentaires selon la revendication 1, pouvant être obtenues par réaction de diesters de l'acide succinique avec 80 à 55 % en moles de 4-méthylbenzonitrile pour 20 à 45 % en moles de 3-méthylbenzonitrile, dont le réseau cristallin correspond pour l'essentiel à celui du composé (I).

7. Compositions pigmentaires selon la revendication 1, pouvant être obtenues par réaction de diesters de l'acide succinique avec 45 à 25 % en moles de 4-méthylbenzonitrile pour 55 à 75 % en moles de 3-méthylbenzonitrile, dont le réseau cristallin correspond pour l'essentiel à celui du composé (II).

8. Procédé de préparation de compositions pigmentaires selon la revendication 1, par réaction de diesters de l'acide succinique avec différents benzonitriles dans un solvant organique en présence d'une base à haute température, **caractérisé en ce qu'**on choisit les proportions en moles des benzonitriles dans une plage de 90 à 15 % en moles de 4-méthylbenzonitrile pour 10 à 85 % en moles de 3-méthylbenzonitrile.

9. Compositions contenant des compositions pigmentaires selon l'une des revendications 1 à 7 ou préparées selon la revendication 8.

10. Utilisation de la composition pigmentaire selon l'une des revendications 1 à 7 ou préparées selon la revendication 8, ou de la composition selon la revendication 9, pour pigmenter un matériau organique.
